## Europäisches Patentamt
## European Patent Office
## Office européen des brevets

(19)

(11) Publication number: **0 232 086**
**B1**

(12)

# EUROPEAN PATENT SPECIFICATION

(45) Date of publication of the patent specification:
**20.06.90**

(51) Int. Cl.⁵: **B60K 17/30**

(21) Application number: **87300570.6**

(22) Date of filing: **22.01.87**

(54) Joint structure for axle housing ball-end.

(30) Priority: **30.01.86 JP 16690/86**

(43) Date of publication of application:
**12.08.87 Bulletin 87/33**

(45) Publication of the grant of the patent:
**20.06.90 Bulletin 90/25**

(84) Designated Contracting States:
**DE GB**

(56) References cited:
**DE-A- 2 931 764**
**US-A- 4 119 167**

(73) Proprietor: **Isuzu Motors Limited, 6-22-10 Minamiooi Shinagawa-ku, Tokyo 140(JP)**

(72) Inventor: **Sasa, Naomichi c/o Isuzu Motors Limited, Fukisawa Factory 8, Tsuchidana, Fujisawa-shi Kanagawa-ken(JP)**

(74) Representative: **Richards, David John et al, PAGE, WHITE & FARRER 54 Doughty Street, London WC1N 2LS(GB)**

ACTORUM AG

## Description

Background of the Invention

Field of the Invention:

The present invention relates generally to a joint structure for an axle, and more particularly to a joint structure for an axle in a driving axle structure with a steering device.

Description of the Prior Art:

According to a conventional arrangement, a driving axle structure equipped with a steering device includes generally a hollow spherical portion formed at the end portion of a non-rotatable tubular axle extending in the transverse direction of the car, a non-rotatable hollow axle casing disposed on the wheel side and a knuckle mounted rotatably on the spherical surface of the hollow spherical portion by a pair of king pins fitted to the end surface of the axle casing and positioned on the diameter substantially in the vertical direction relative to the hollow spherical portion and a king pin bearing supporting pivotally each of the king pins. A constant-velocity joint is disposed inside the space defined by the hollow spherical portion, the axle casing and the knuckle. Moreover, the outer race of the constant-velocity joint is coupled to a drive shaft disposed rotatably inside the axle casing on the wheel side while its inner race is coupled to an axle shaft supported rotatably inside the tubular axle on the car body side. In the driving axle structure having this conventional arrangement, a dust-tight annular seal is mounted to the knuckle in such a manner as to come into sliding contact with the spherical surface of the hollow spherical portion and to prevent any dust from entering the constant-velocity joint.

According to this, a conventional type arrangement there is a limitation to the seal in that the seal can hardly be disposed ideally to the spherical portion of each of the tubular axle since the tip of the knuckle, that is, dust-tight seals are hindrances. The hollow spherical portion in the driving axle structure forms a member for supporting a load as a portion of an axle. For this reason, the conventional configuration of a rotary body housing an axle shaft which is worked by means of a lathe does not allow for any reduction in the diameter of the neck from the viewpoints of strength, so that a seal sliding surface necessary for satisfactory steering cannot be ensured and the maximum steering angle possible is therefore restrained up to about 30°.

A limitation imposed on the disposition of the constant velocity joint is as follows: The tip of the hollow spherical portion formed at the end of the tubular axles buttes against or interferes with the spherical surface of the outer race of the constant-velocity joint having an increased diameter so that the angle of rotation of the drive shaft disposed inside the axle casing and hence the angle of rotation of the knuckle relative to the hollow spherical portion, that is, the steering angle, is limited to approximately 30°. In practice, however, since the internal structure of the constant-velocity joint are actually arranged to allow the maximum steering angle of about 40°, and an improvement is therefore desired in the disposition of the seal and the constant-velocity joint having a steering-angle function to be matched with such structure.

For the above-described reason, the prior art discloses an elliptic-seal structure in which a surface of each knuckle on which a seal is mounted is inclined with respect to the hollow spherical portion of an associated tubular axle housing end. This type of structure is disclosed, for example, in the specifications of Japanese utility Model Publication No. 37 386/1984 and 37 387/1984.

First of all, a diagrammatic description will be made with respect to a front-wheel support device for a front drive vehicle described in Japanese utility Model Publication No. 37 386/1984. Either an oil seal member or an oil seal protection member is so formed as to have an axial length greater on the rear side than on the front side in the direction of movement of the vehicle when a knuckle housing is mounted. The seal of this prior art is disposed around a king-pin for pivoting the knuckle housing and a trunnion socket in an inclined manner at a predetermined angle, so that, when a vehicle is moved straight, a flat surface including the seal edge of either the oil seal member or the oil seal protection member is disposed closer to the shaft of the trunnion socket on the front side than on the rear side. In this front-wheel support device for a front drive vehicle, the seal is formed in a special shape so as to increase the steering angle. However, even if the seal is formed in such a special shape, it is not necessarily satisfactory in respect of its strength, sealing characteristics and durability. In addition, this type of seal is difficult to produce and of no practical use, thus leading to various problems.

In the second place, a diagrammatic description will be made with respect to an oil seal device for a front-wheel support of a front drive vehicle described in the specification of Japanese Utility Model Publication No. 37 387/1984. Referring to an oil seal member in this prior art, a rubber-made seal body has an equal width along its entire circumference in a natural state, and a circumferential groove of a L-shaped in section is formed from a mounting flange of the seal body to an arm portion perpendicular to the mounting flange. A reinforced flange member of a metal-made cylindrical flange body has a cut surface on the cylindrical side, such cut surface being inclined with respect to a flange surface, and is adherently engaged with the circumferential groove in a state wherein this groove is under an elastic tension. The reinforced flange member is also disposed around a king-pin for pivoting the knuckle housing and the trunnion socket in an inclined manner at a predetermined angle, so that, when a vehicle is moved straight, a flat surface including the edge of the annular seal is positioned nearer the trunnion socket on the front side than on the rear side. As in the case of the above-described example, this oil seal device for the front-wheel support of a front drive vehicle needs a seal with a special shape, and thus there is a problem in that the seal provided may not necessarily be satisfactory from the viewpoint of strength, sealing characteristics and durability, nor with respect to considerations regarding the production of the seal.

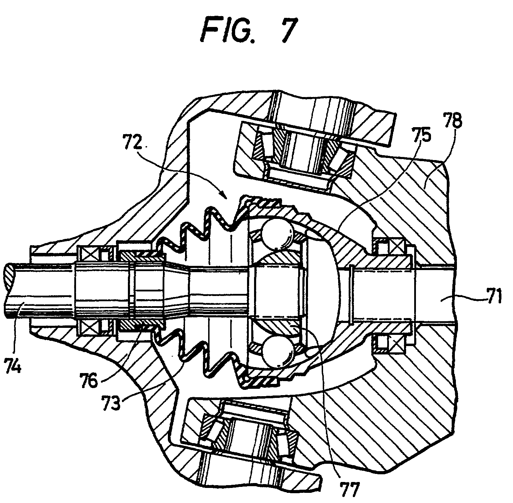

Heretofore known drive axles equipped with a steering device include the arrangement which is opposite to the conventional arrangement described above or in other words, the arrangement wherein the disposition of the constant-velocity joint is reversed. This constant-velocity joint is disposed inside the space defined by the hollow spherical portion at the end of the tubular axle, the axle casing and the knuckle fixed to the axle casing. However, the inner race of the constant-velocity joint is coupled to the drive shaft disposed rotatably inside the axle casing on the wheel side while the outer race of the constant-velocity joint is coupled to the axle shaft supported rotatably inside the tubular axle on the car body side. This type of joint structure for an axle housing ball-end is disclosed, for example, in the specification of Japanese Patent Laid-Open No. 24 226/1981. A follower steering shaft of the type disclosed in the above-mentioned specification will be hereinafter described with reference to Fig. 7.

Referring to Fig. 7, the follower steering shaft is essentially constituted by three components which can be separated from one another: a shank 71 coupled to a differential unit; a constant-velocity joint 72; and a steering shaft 74 for driving a boss or a sun gear (not shown) within a planetary unit. The constant-velocity joint 72 includes a spherical external coupling member 75 as an outer race mounted on one end of the shank 71 and an internal coupling member 77 as an inner race mounted on a corresponding end of the steering shaft 74. A bellows 73 hermetically seals the inner chamber of the constant-velocity joint 72, the bellows being detachably mounted on the external coupling member 75 of the constant-velocity joint 72, and a neck 76 of the bellows 73 being maintained in air-tight contact with the steering shaft 74 for free movement along the axis thereof. The bellows 73 has an axial residual stress, and is therefore formed strongly enough to be extended to its maximum axial length. The constant-velocity joint 72 equipped with the bellows 73 can be removed without the need to release it.

In such driving axles equipped with a steering device, however, bellows 73 as the dust-tight seal are interposed between a spherical external joint member 75 as the outer race of the constant-velocity joint 72 and a drive shaft 74, though the drive shaft 74 of the constant-velocity joint 72 having a reduced diameter is positioned on the wheel side, in order to prevent intrusion of dust and the like into the constant-velocity joint 72. Therefore, since the tip of the tubular axle 78 butts against or interferes with the outer peripheral surface of the bellows 73 having an increased diameter, the angle of rotation of the drive shaft disposed inside the axle casing and hence the angle of rotation of the knuckle to the tubular axle 78, that is, the steering angle, is limited in the same way as described above.

Summary of the Invention

It is an object of the present invention to provide a joint structure for an axle, which solves the above-described problems and increase the steering angle of each joint portion on the hollow spherical portion of the respective axle, that is, the inflective angle.

It is another object of the present invention to provide a joint structure for an axle capable of improving the steerability of a vehicle when it makes sharp turns, and yet of ensuring the strength of the entire axle.

It is another object of the present invention to provide a joint structure for an axle, in which the end surface of a knuckle mounted on an axle casing is inclined at a predetermined angle with respect to the horizontal axis of the axle, for example, about 4°.

It is another object of the present invention to provide a joint structure for an axle, in which the position of an annular seal mounted on the knuckle is inclined at a predetermined angle with respect to the hollow spherical portion of the tubular axle.

It is a further object of the present invention to provide a joint structure for an axle, in which the annular seal mounted on the knuckle need not be formed into a special shape, and yet which suffers no problems from the viewpoint of the strength, sealing characteristics and durability of the annular seal, nor with respect to the production of the same.

It is a still further object of the present invention to provide a joint structure for an axle, in which the annular seal that is the knuckle can be moved freely over the hollow spherical surface without being hindered by the axle, so that the steering angle can be increased.

It is another object of the present invention to provide a joint structure for an axle, in which, since the seal mounted on the knuckle is substantially free from any tendency to interferency with the operation of a drive shaft connected to a constant-velocity joint and the tip of the hollow spherical surface of the tubular axle, the steering angles of the wheels can be increased, thus permitting a reduction in the turning radius of a vehicle and improvements in the steerability thereof when making sharp turns.

It is another object of the present invention to provide a joint structure for an axle in which, in contrast to the prior art, while a vehicle is moving straight forward, the annular seal approaches the boundary between the tubular axle and the hollow spherical portion, that is, the position of the neck, toward the front side of the vehicle more than it does toward the rear side thereof, so that the distance necessary for it to come into contact with the neck at the rear position is increased, thereby increasing the steering angle and reducing the turning radius of a vehicle.

It is yet another object of the present invention to provide a joint structure for an axle, in which the assembly of a dust guard annular seal for the tubular axle is easy, and the water tightness of the annular seal is remarkably improved, so that, if a particular small member of a drive shaft connected to a constant-velocity joint is used as a mechanical safety device for torque, it is possible to prevent damage or breakage of other devices and parts.

Brief Description of the Drawings

Fig. 1A is a top plan view diagrammatically showing a knuckle mounted on an axle casing in a joint structure for an axle of a drive axle structure with a steering device in accordance with the present invention;

Fig. 1B is a cross-sectional view taken along line H – H of Fig. 1A;

Fig. 1C is a front elevational view taken in the direction of an arrow G of Fig. 1A;

Fig. 2 is a partial sectional view of a preferred embodiment of a joint structure for an axle of a driving axle structure with a steering device in accordance with the present invention;

Fig. 3A is an illustration diagrammatically showing the relationship between the hollow spherical surface of the tubular axle and the annular seal the knuckle in the joint structure for an axle in accordance with the present invention;

Fig. 3B is an illustration diagrammatically showing the relationship between the hollow spherical surface of the tubular axle and the annular seal for the knuckle in the joint structure for an axle in accordance with the prior art;

Fig. 4A is a perspective view diagrammatically showing an upper knuckle member of the knuckle showing another embodiment in accordance with the present invention;

Fig. 4B is a cross-sectional view of the knuckle member shown in Fig. 4A;

Fig. 5A is a perspective view diagrammatically showing a lower knuckle member of the knuckle showing another embodiment in accordance with the present invention;

Fig. 5B is a cross-sectional view of the knuckle member shown in Fig. 5A;

Fig. 6 is a partial cross-sectional view similar to Fig. 1, but showing another preferred embodiment of a joint structure for an axle of a driving axle structure with a steering device in accordance with the present invention; and

Fig. 7 is a cross-sectional view similar to Fig. 6, but showing the joint structure for an axle of the prior art.

Detailed Description of Preferred Embodiments

Preferred embodiments of a joint structure for an axle of a driving axle structure with a steering device in accordance with the present invention will be described below with reference to the accompanying drawings.

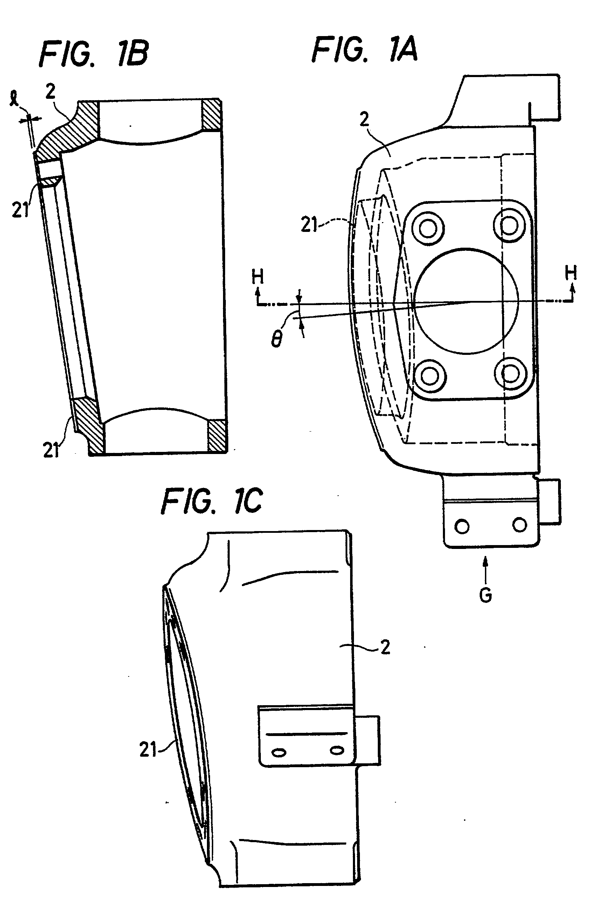

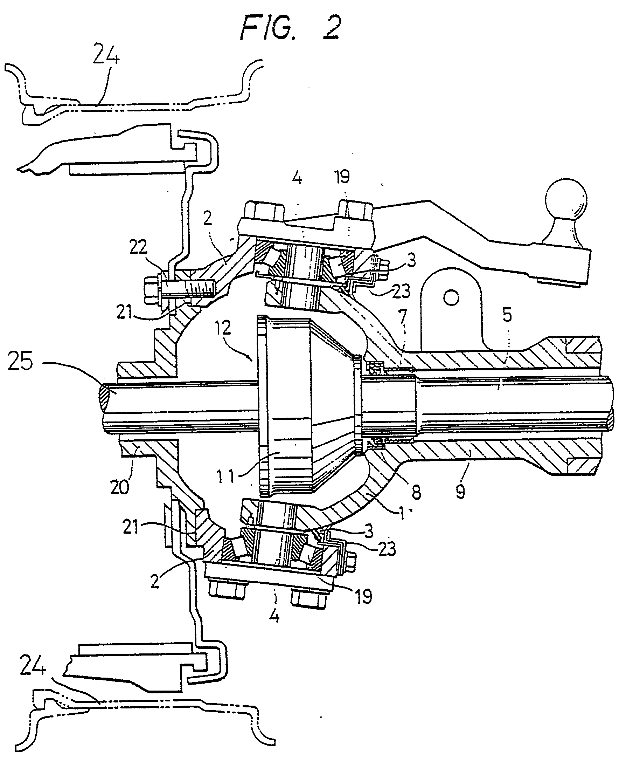

Referring to Figs. 1A, 1B and 1C respectively showing a first preferred embodiment of a joint structure for an axle in accordance with the present invention, a knuckle 2 mounted on an axle casing 20 (refer to Fig. 2) is schematically illustrated. Fig. 1A is a top plan view of the knuckle 2, in which an annular abutting surface 21 of the knuckle 2 mounted on the axle casing 20 is inclined at a predetermined angle θ, for example, about 4° with respect to the axis of an axle, that is, the horizontal axis of the axle casing 20. Fig. 1B shows the annular abutting surface 21 of the knuckle 2 which is inclined at the predetermined angle θ, for example, about 4° with respect to the axis of the axle casing 20, and therefore is biased by a distance ℓ, for example, a distance of about 2 mm. Fig. 1C shows the annular abutting surface 21 of the tubular knuckle 2 which is inclined at the predetermined angle θ.

Fig. 2 shows the first preferred embodiment of a joint structure for an axle of a driving axle structure with a steering device in accordance with the present invention, more specifically a joint structure for an axle incorporating the knuckle 2 shown in Fig. 1A. This joint structure has a hollow spherical portion 1, and an annular seal 3 is provided in order to prevent foreign matter from entering the inner chamber of the joint structure. The annular seal 3 made of rubber, felt or the like is mounted on the knuckle 2 in contact with the hollow spherical portion 1 of an tubular axle 9. The annular seal 3 is disposed on the hollow spherical portion 1 next to kingpin bearings 19 of a pair of upper and lower king-pins 4. While the knuckle 2 is swinging about the axis connecting the king-pins 4, the seal 3 can perform its sealing function as it hermetically slides on the spherical portion 1. The knuckle 2 is fixed to the axle casing 20 by a bolt 22.

This constant-velocity joint 12 is disposed inside the space defined by the hollow spherical portion 1 at the end of the tubular axle 9, the axle casing 20 and the knuckle 2 fixed to the axle casing 20. The inner race of the constant-velocity joint 12 is coupled to a drive shaft 25 disposed rotatably inside the axle casing 20 on the wheel side while the outer race of the constant-velocity joint 12 is coupled to the axle shaft 5 supported rotatably inside the tubular axle 9 on the car body side. It should be understood that the annular abutting surface 21 of the knuckle 2 mounted on the axle casing 20 is horizontally inclined at the predetermined angle θ, for example, about 4° with respect to the axis of the axle, that is, the axis of the axle casing 20. Accordingly, the axis of the knuckle 2 is horizontally inclined at the predetermined angle θ, for example, about 4° with respect to the axis of the axle casing 20. Therefore, the knuckle 2 and the tubular axle 9 are inclined at a predetermined angle in such a manner that, while a vehicle is moving straight forward, the annular portion of the annular seal 3 and a seal protecting member 23 approaches the tubular axle 9, that is, the boundary between the tubular axle 9 and the hollow spherical portion 1 toward the front side of a vehicle more than it does toward the rear side thereof.

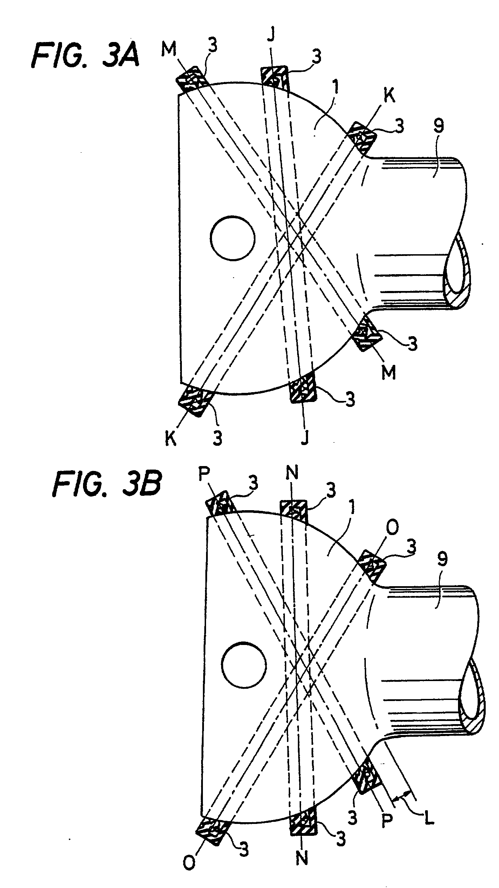

A mounting structure in which the annular seal 3 is inclined with respect to the hollow spherical portion 1 will be described below with reference to Figs. 3A and 3B. In Figs. 3A and 3B, the spherical portion 1 is integral with the end of the tubular axle 9, and the annular seal 3 is secured to the knuckle 2.

In Fig. 3B, there is shown the relation between the annular seal 3 fitted to the knuckle and the hollow spherical portion 1 formed at the end of the tubular axle 9 in the conventional joint structure of the axle. In this case, an angle at which the annular seal 3 is mounted is not inclined as in the case of the prior art, that is, the predetermined angle θ is 0°, with the annular seal 3 corresponding to positions N, O and P. The position N of the annular seal 3 corresponds to a steering angle of 0°, the position O of the annular seal 3 corresponding to the maximum steering angle of a wheel on the inner side of a curve, that is, a case wherein the maximum steering angle of the wheel on the inner side is 34°, and the position P of the annular seal 3 corresponding to the maximum steering angle of a wheel on the outer side of the curve, that is, a case where the maximum steering angle of the wheel on the outer side is 27°. If the seal mounting angle is 0° in this manner, when the seal 3 is mounted, the spherical portion 1 cannot be utilized from end to end, that is, it is impossible completely to utilize the entire range continuing to a position at which the annular seal 3 comes into contact with the tubular axle 9. Accordingly, although there is a margin equivalent to a length indicated by symbol L on the hollow spherical portion 1, the marging cannot be covered.

In other words, the N position of the annular seal 3 is up to the 0 position in terms of a steering angle of the wheel on the inner side but generally, there is still the allowance of the steering angle capacity of the constant-velocity joint. Therefore, the steering angle can be increased by inclining the annular seal 3 by a predetermined angle in such a manner as to let the annular seal 3 come closer to the P position from the N position and to increase the moving distance of the annular seal 3 from the N position to the O position. In terms of the steering angle of the wheel on the outer side in this case, however, since the N position of the annular seal 3 comes closer to the P position, there is no sliding surface (corresponding to the upper portion of Fig. 3B) on the spherical surface of the hollow spherical portion 1 formed at the end of the tubular axle 9 and the annular seal 3 protrudes out from the slide surface. Moreover, according to the conventional disposition, since the tip of the hollow spherical portion 1 butts against the outer race of the constant-velocity joint, the slide surface of the annular seal of the hollow spherical portion 1 cannot be extended so that the annular seal 3 cannot be brought closer to the P position from the N position. Therefore, a structure wherein the constant-velocity joint does not interfere even when the slide surface for the steering angle of the wheel on the outer side is increased has been desired.

Next, in Fig. 3A, there is shown the relation between the annular seal 3 and the hollow spherical portion 1 in the joint structure of the axle in accordance with the present invention.

Fig. 3A shows an embodiment to which the joint structure for an axle in accordance with the present invention is applied, in which the mounting angle of the seal 3, that is, the predetermine angle θ is, for example, about 4°, with the annular seal 3 being located at positions J, K and M. The position J of the annular seal 3 corresponds to a steering angle of 0°, the position K of the annular seal 3 corresponding to the maximum steering angle of the wheel on the inner side, that is a steering angle of 38°, and the position M of the annular seal 3 corresponding to the maximum steering angle of the wheel on the outer side, that is, a steering angle of 30°. When the annular seal 3 is mounted, if the seal mounting angle is inclined at about 4°, the slide distance of the seal 3 on the side of the steered wheel on the inner side can be enlarged effectively to utilize the whole spherical surface of the hollow spherical portion 1.

In other words, as shown in Fig. 1, the disposition of the constant-velocity joint 12 is reverce to the conventional disposition. The outer race of the constant-velocity joint 12 is coupled to the axle shaft 5 and since the drive shaft 25 having a reduced diameter is positioned on the side of the wheel 24, the tip of the hollow spherical portion 1 which is formed at the end of the tubular axle 5 can extend on the annular seal slide surface (the portion corresponding to the upper portion of Fig. 3A) of the hollow spherical portion 1 on the steering angle side of the wheel on the outer side without interferring with the outer race of the constant-velocity joint 12, and the slide surface of the annular seal 3 on the steering angle side of the wheel on the outer side can be thus secured. Thereore, as described above, it is possible to increase the maximum steering angle of the wheel on the inner side by inclining the N position of the annular seal 3 towards the P position and setting the position of the annular seal 3 to the J position so as to increase the moving distance of the annular seal 3 from the J position to the K position, and at the same time, to increase the maximum steering angle of the wheel on the outer side by increasing the moving distance of the annular seal 3 from the J position to the M position.

Moreover, even when the annular seal 3 is slid from the J position to the M position, the annular seal 3 does not protrude from the slide surface of the hollow spherical portion 1.

If the annular seal 3 is set at a position corresponding to the substantial maximum diameter of the hollow spherical portion 1 of the tubular axle 9, it can, during assembly, be removed from the hollow spherical portion 1 solely by virtue of the flexibility inherent in seal rubber. Thereore, unlike a conventional type of structure, it is unnecessary partially to cut the seal and a retainer prior to such removal. In general, a slit formed in a partially cut configuration might cause the deterioration of sealing characteristics of the seal.

The axle shaft 5 is supported by a bearing 7. An oil seal 8 which is radially tightened by a lip is capable of hermetically sealing a rotating or reciprocally movable portion, thus preventing differential-gear lubricating oil from entering the inner chamber of the joint. Since the interference between the hollow spherical portion of the tubular axle 9 and the knuckle 2 confines the length of a portion extending from the respective king-pins 4 to the exterior, that is, the portion of the axle shaft of the side of the wheel 24, that is, the drive shaft 25 which might interfere with the tip of the hollow spherical portion 1 of the tubular axle 9 preferably has a structure as thin as possible in order to ensure a satisfactory area in which the annular seal 3 can be slided. Since the thinnest portion of the drive shaft 25 is used as an interference portion, it is effective in terms of the structure of the constant-velocity joint 12 that the constant-velocity joint 12 is disposed in a direction opposite to that of a normal structure, that is, an outer race 11 of a constant-velocity joint 12 is mounted on one end of the axle shaft 5. For example, if the thinnest portion of the drive shaft 25 is formed in such a manner that it is twisted off at the time of applicaton of an excessive power input, it is possible to effectively protect other expensive devices and components.

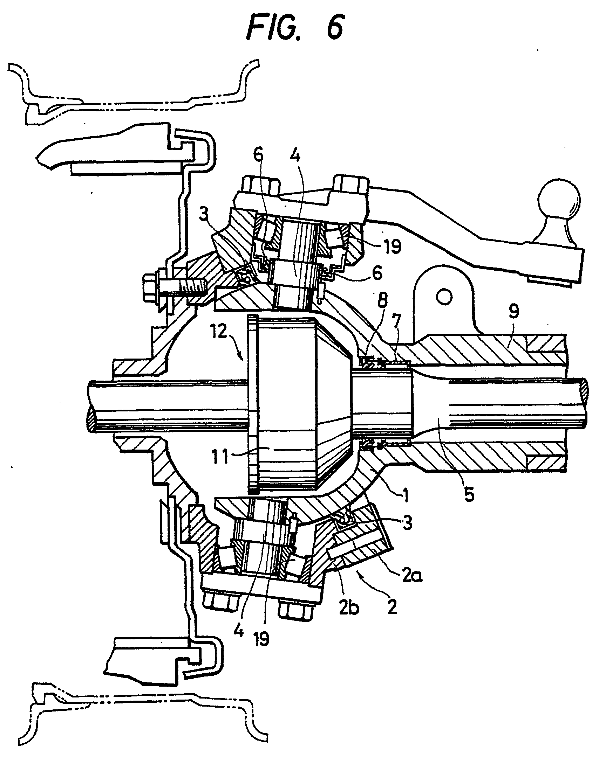

In addition, in order to effectively utilize the area of the surface of the hollow spherical surface 1 on which the annular seal 3 slides, it is preferable that the annular seal 3 is located at the middle position of the slide surface while a vehicle is moving straight forward. For this reason, in order to ideally dispose the annular seal 3 while it has a shape easy to produce and a true circle enabling positive performance of its function, it is preferable that the annular seal 3 is disposed at an ideal position corresponding to each of upper and lower substantial middle portions by taking notice of the fact that the upper and lower portions of the annular seal 3 is not substantially moved even while the knuckle 2 is swinging. For example, as shown in Fig. 6, the annular seal 3 may be arranged to obliquely cross the axis connecting the upper and lower king-pins 4. This arrangement will be described below with reference to Figs. 4A, 4B, 5A, 5B and 6.

Referring to Fig. 6 showing a structure in which the annular seal 3 is secured at the aforementioned location as described above, the knuckle 2 is constituted by upper and lower divisions: knuckle members 2a and 2b. The annular seal 3 is sandwiched between the knuckle members 2a and 2b, whereby the annular seal 3 may be firmly mounted.

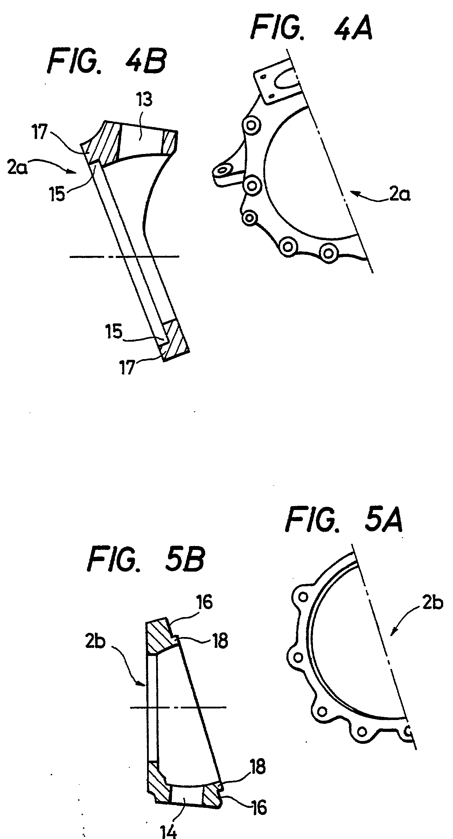

Figs. 4A, 4B, 5A and 5B shows the details of the structure in which the knuckle 2 is divided into the knuckle members 2a and 2b.

Fig. 4A is a perspective view of the knuckle member 2a, that is, the knuckle member including an upper king-pin hole 13, with Fig. 4B being a cross-sectional view of the member 2a shown in Fig. 4A. Fig. 5A is a perspective view of the knuckle member 2b, that is, the lower knuckle member, with Fig. 5B being a cross-sectional view of the member 2b shown in Fig. 5A. The upper king-pin hole 13 in the knuckle member 2a may be machined together with a king-pin hole 14 in the knuckle member 2b. An cutout step 15 of the knuckle member 2a is engaged with a projection 18 of the knuckle member 2b while a projection 17 of the knuckle member 2a is engaged with a cutout step 16 of the knuckle member 2b. The depth of the cutout step 15 differs from the height of the projection 18, and thus a clearance is formed therebetween for firmly clamping the annular seal 3. By mounting the annular seal 3 on the knuckle 2 in this manner, the annular seal 3 is disposed obliquely to cross the axis connecting king-pin bearings 19 mounted around the king-pins 4. Therefore, since either of the upper and lower king-pins 4 is exposed to the outside of the annular seal 3, a king-pin seal 6 is disposed around the exposed king-pin bearing 19.

The embodiment of the joint structure for an axle in accordance with the present invention is constructed as described above. However, it will be readily understood by those skilled in the art that this invention is not confined solely to the structure described above in detail. For example, the following structure may be applied.

Even in a conventional structure, if a constant-velocity joint is reversed such that the front side of the seal mounting surface is inclined inwardly of a vehicle with the rear side outwardly of the same, the difference between the steering angles of the wheels on the inner and outer sides in the Ackerman steering mechanism is suitably distributed between the areas of the seal slide surfaces corresponding to the respective wheels, thereby increasing the steering angle of the wheel on the inner side, so that the turning radius of the vehicle can be reduced.

Referring to a method of inclining the seal mounting surface, the inclination of the surface of a knuckle to be worked provides the advantage that it is unnecessary to prepare a seal of a special shape. The structure of the invention has the potential of achieving of the steering angles 40°, 40° of wheels by disposing the seal in an obliquely crossed manner with respect to the axis connecting the king-pins. Therefore, where a difference is to be formed between the steering angles of the wheels on the inner and outer sides in the Ackerman steering mechanism, a caster angle equivalent to half the difference is formed, and in addition each terminal end of the axle housing is inclined by half of the angle difference in order to prevent the occurence of unwanted interference. By these measures, as an example, it is possible to obtain large steering angles such as 45° and 35°. As a matter of course, although the built-in constant-velocity joints need ability responsive to these steering angles, constant-velocity joints generally have such ability as a part of their own functions.

## Claims

1. A joint structure for an axle for a driving axle equipped with steering means, comprising: non-rotatable tubular axles (9) each extending in the transverse direction of a car; spherical portions (1) each having a spherical surface formed at the end portion of said tubular axle; non-rotatable hollow axle casings (20) each disposed on a wheel side with respect to said tubular axle (9); knuckles (2) each mounted to said axle casing (20) and supported rotatably by a pair of king pins (4) fitted to said spherical portion; annular seals (3) each fitted to said knuckle (2) and coming into sliding contact with said spherical surface of said portion; and constant-velocity joints (12) each connecting an axle shaft (5) supported rotatably in said tubular axle (9) to a drive shaft (25) disposed rotatably inside said axle casing (20), and disposed inside the space defined by said spherical portion (1), said knuckle (2) and said axle casing (20);

wherein the outer race (11) of said constant-velocity joint is coupled to the end of said axle shaft (5);

said axle casing (20) has an annular end surface crossing substantially orthogonally the axis of said axle casing;
said knuckle has an annular end surface (21) inclined by a predetermined angle from a surface orthogonal to the axis of said knuckle (2);
and when said annular end surface of said axle casing and said annular end surface of said knuckle (21) are fitted in a contacting state, the axis of said right and left knuckles cross each other at the back of the axis of said tubular axle.

2. A joint structure for an axle according to claim 1, wherein said predetermined angle is about 4°.

3. A joint structure for an axle according to claim 1, wherein said annular seal is mounted on one end of said knuckle.

**Patentansprüche**

1. Gelenkanordnung für eine Achse zu einer mit einer Lenkeinrichtung versehenen Antriebsachse, bestehend aus: nicht-drehbaren Rohrachsen (9), von denen jede in Querrichtung eines Fahrzeugs verläuft; kugelförmigen Teilen (1), von denen jeder eine kugelige Fläche aufweist, die am Endteil der Rohrachse ausgebildet ist; nicht drehbaren hohlen Achsgehäusen (20), von denen jedes bezüglich der Rohrachse (9) auf einer Radseite angeordnet ist; Gelenken (2), von denen jedes auf das Achsgehäuse (20) montiert und drehbar von zwei Achsschenkelbolzen (4) gehalten ist, die am kugelförmigen Teil angebracht sind; Dichtringen (3), von denen jeder am Gelenk (2) angebracht ist und gleitend gegen die kugelige Fläche des Teils anliegt; und Gleichganggelenken (12), von denen jedes eine Achswelle (5), welche drehbar in der Rohrachse (9) gelagert ist, mit einer Antriebswelle (25) verbindet, die innerhalb des Achsgehäuses (20) drehbar aufgenommen und innerhalb des durch den kugeligen Teil (1), das Gelenk (2) und das Achsgehäuse (20) abgegrenzten Raums angeordnet ist;
wobei der äußere Laufring (11) des Gleichganggelenks mit dem Ende der Achswelle (5) gekoppelt ist;
das Achsgehäuse (20) eine ringförmige Endfläche aufweist, welche im wesentlichen rechtwinklig zur Achse des Achsgehäuses verläuft;
das Gelenk eine ringförmige Endfläche (21) aufweist, die um einen vorbestimmten Winkel gegen eine zur Achse des Gelenks (2) rechtwinklig verlaufende Fläche geneigt ist;
und wobei dann, wenn die ringförmige Endfläche des Achsgehäuses und die ringförmige Endfläche des Gelenks (21) gegeneinander zur Anlage gebracht sind, die Achsen des rechten und linken Gelenks sich hinter der Achse der Rohrachse schneiden.

2. Gelenkanordnung für eine Achse nach Anspruch 1, wobei der vorbestimmte Winkel ca. 4° beträgt.

3. Gelenkanordnung für eine Achse nach Anspruch 1, wobei der Dichtring auf ein Ende des Gelenks montiert ist.

**Revendications**

1. Structure de joint d'essieu pour un essieu moteur équipé de dispositifs de direction, comprenant: des essieux tubulaires non orientables (9) se prolongeant chacun dans une direction transversale à une voiture; des parties sphériques (1) présentant chacune une surface sphérique formée à l'extrémité dudit essieu tubulaire; des carters d'essieu creux non orientables (20) positionnés chacun sur un côté roue par rapport audit essieu tubulaire (9); des joints articulés (2) montés chacun sur ledit carter d'essieu (20) et s'appuyant de façon rotative sur un couple de pivots de fusée (4) montés sur ladite partie sphérique; joints d'étanchéité annulaires (3) montés chacun sur lesdits joints articulés (2) et établissant un contact coulissant sur ladite surface sphérique de ladite partie; et des joints homocinétiques (12) reliant chacun un arbre de roue (5) s'appuyant de façon rotative dans ledit essieu tubulaire (9) à un arbre de transmission (25) placé de façon rotative à l'intérieur dudit carter d'essieu (20), et placés à l'intérieur de l'espace délimité par ladite partie sphérique (1), ledit joint articulé (2) et ledit carter d'essieu (20);
où la bague extérieure (11) dudit joint homocinétique est accouplée à l'extrémité dudit arbre de roue (5);
ledit carter d'essieu (20) présente une surface d'extrémité annulaire croisant essentiellement à l'orthogonale l'axe dudit carter d'essieu;
ledit joint articulé présente une surface d'extrémité annulaire (21) inclinée selon un angle prédéterminé par rapport à une surface à l'orthogonale de l'axe dudit joint articulé (2);
et lorsque la surface d'extrémité annulaire dudit carter d'essieu et ladite surface d'extrémité annulaire dudit joint articulé (21) sont placées en contact l'une avec l'autre, les axes desdits joints articulés droit et gauche se croisent à l'arrière de l'axe dudit essieu tubulaire.

2. Structure de joint d'essieu selon la revendication, où ledit angle prédéterminé est d'environ 4°.

3. Structure de joint d'essieu selon la revendication 1, où ledit joint d'étanchéité annulaire est monté en une extrémité dudit joint articulé.

*FIG. 1B*

*FIG. 1A*

*FIG. 1C*

FIG. 2

FIG. 3A

FIG. 3B

FIG. 4B

FIG. 4A

13

17

2a

15

15

17

2a

FIG. 5A

FIG. 5B

16

18

2b

2b

18

16

14

## FIG. 6

## FIG. 7